# EUROPÄISCHE PATENTANMELDUNG

(11) **EP 3 012 654 A1**
(43) Veröffentlichungstag der Anmeldung: **27.04.2016**
(21) Anmeldenummer: 15190498.4
(22) Anmeldetag: 20.10.2015
(51) Int. Cl.: G01S 7/521, G01S 15/93, G10K 9/22, G10K 11/00

(54) **ULTRASCHALLSENSOR FÜR EIN KRAFTFAHRZEUG, ANORDNUNG, KRAFTFAHRZEUG SOWIE HERSTELLUNGSVERFAHREN**

(30) Priorität: 21.10.2014 DE 102014115333
(71) Anmelder: Valeo Schalter und Sensoren GmbH, 74321 Bietigheim-Bissingen (DE)
(72) Erfinder: Jung, Thomas, 74321 Bietigheim-Bissingen (DE); Hamm, Wolfgang, 74321 Bietigheim-Bissingen (DE); Triebl, Stefan, 74321 Bietigheim-Bissingen (DE); Lill, Anton, 74321 Bietigheim-Bissingen (DE); Kuhnle, Daniel, 74321 Bietigheim-Bissingen (DE)

(57) **Zusammenfassung**

Die Erfindung betrifft einen Ultraschallsensor (1) für ein Kraftfahrzeug, mit einer Membran (2), welche zum Aussenden eines Ultraschallsignals mittels eines Aktors (6) anregbar ist, mit einem Gehäuse (9), in welchem die Membran (2) zumindest bereichsweise angeordnet ist, und mit einem Dämpfungselement (12), welches in dem Gehäuse (9) zum Dämpfen der Schwingung der Membran (2) angeordnet ist, wobei das Dämpfungselement (12) zumindest teilweise aus einem Butylkautschuk und/oder aus Bitumen besteht.

## Beschreibung

Die vorliegende Erfindung betrifft einen Ultraschallsensor für ein Kraftfahrzeug, mit einer Membran, welche zum Aussenden eines Ultraschallsignals mittels eines Aktors anregbar ist, mit einem Gehäuse, in welchem die Membran zumindest bereichsweise angeordnet ist und mit einem Dämpfungselement, welches in dem Gehäuse zum Dämpfen der Schwingung der Membran angeordnet ist. Überdies betrifft die vorliegende Erfindung eine Anordnung für ein Kraftfahrzeug mit zumindest einem solchen Ultraschallsensor und einem Verkleidungsteil. Zudem betrifft die vorliegende Erfindung ein Kraftfahrzeug mit einer solchen Anordnung. Schließlich betrifft die vorliegende Erfindung ein Verfahren zum Herstellen eines solchen Ultraschallsensors.

Das Interesse richtet sich vorliegend auf Ultraschallsensoren für Kraftfahrzeuge. Derartige Ultraschallsensoren können beispielsweise in Fahrerassistenzsystemen, wie beispielsweise Parksystemen oder ACC(Adaptive Cruise Control)-Systemen, verwendet werden. Derartige Fahrerassistenzsysteme umfassen üblicherweise mehrere Ultraschallsensoren, die am Kraftfahrzeug angeordnet sind, und mittels denen der Umgebungsbereich des Kraftfahrzeugs auf das Vorhandensein von Objekten überprüft werden kann, die für das weitere Fortbewegen des Kraftfahrzeugs im Weg sind.

Derartige Ultraschallsensoren umfassen eine Membran, die beispielsweise topfförmig ausgebildet sein kann. Die Membran kann mit einem entsprechenden Aktor, beispielsweise einem piezoelektrischen Element, zu mechanischen Schwingungen angeregt werden. Somit kann mit dem Ultraschallsensor ein Ultraschallsignal ausgesendet werden. Dieses ausgesendete Ultraschallsignal wird dann an Hindernissen beziehungsweise Objekten reflektiert und kann wieder von dem Ultraschallsensor empfangen werden, nämlich als Echo. Anhand des empfangenen Echos kann der Abstand zwischen dem Objekt und dem Kraftfahrzeug bestimmt werden. Der Abstand wird dabei in Abhängigkeit von der Laufzeit des Echos ermittelt, wobei hier eine Zeitdauer zwischen dem Sendezeitpunkt und dem Empfangszeitpunkt gemessen wird.

Die Ultraschallsensoren können bekannterweise im Frontbereich und/oder im Heckbereich des Kraftfahrzeugs, insbesondere in den Stoßfängern, verbaut sein. Die Membran ist in einem Gehäuse möglichst schwingungsentkoppelt gehalten. Das Ziel ist es hierbei, möglichst keine Schwingungen von der Membran auf das Gehäuse oder andere benachbarte Bauteile des Ultraschallsensors zu übertragen. Dies wird gemäß dem Stand der Technik vor allem dadurch erreicht, dass die Membran mit möglichst wenig Kontaktfläche, möglichst wenig Montagekraft und einem möglichst weichen Material gehalten wird. Beispielsweise kann ein entsprechendes Dämpfungselement in dem Gehäuse vorgesehen sein, das aus Silikon gefertigt ist.

Ein Nachteil hierbei ist, dass die Membran frei schwingen kann und daher nach der Anregung, also nach dem Aussenden des Ultraschallsignals, relativ lange nachschwingen kann. Dies kann dazu führen, dass sehr nahe Objekte beziehungsweise Hindernisse nicht erkannt werden können. Weiterhin kann es der Fall sein, dass die Schwingungen der Membran als sogenannte Scheinechos empfangen werden und somit fälschlicherweise ein Objekt in dem Umgebungsbereich des Kraftfahrzeugs erkannt wird. Ein weiterer Nachteil ist, dass durch die schwache sehr elastische Lagerung die mechanische Stabilität sehr gering ist. Bei äußerem Druck oder Verdrehen der Membran kann der Ultraschallsensor zerstört werden, da hier die Kontaktierung des piezoelektrischen Elements beschädigt werden kann. Weiterhin kann es bei einem Dämpfungselement aus Silikon der Fall sein, dass Silikonöl austritt. Dieses Silikonöl kann ein Lackieren des in einem Verkleidungsteil des Kraftfahrzeugs angeordneten Ultraschallsensors erschweren.

In diesem Zusammenhang beschreibt die DE 10 2006 028 221 A1 einen Ultraschallsensor für ein Kraftfahrzeug mit einem Gehäuse und einer in oder an einem Abschnitt des Gehäuses gelagerten Membran. An oder in einem Wandabschnitt der Membran ist mindestens ein stabilisierend und/oder dämpfend wirkendes Zusatzelement angeordnet. Dieses Zusatzelement kann beispielsweise aus einer Aluminiumlegierung gebildet sein.

Weiterhin beschreibt die DE 199 37 195 B4 einen Ultraschallwandler mit einem Gehäuse und einer Membran. Zudem umfasst der Ultraschallwandler ein gummiartig ausgebildetes, die Membran in dem Gehäuse haltendes Halteelement. Das Halteelement weist einen ersten Abschnitt zur Abdichtung gegenüber dem Gehäuse auf. Des Weiteren weist das Halteelement einen weiteren, sich an den ersten Abschnitt anschließenden und das Gehäuse in axialer Richtung übertragenden zweiten Abschnitt mit einem Konus auf, wobei der Konus im Bereich seines sich verjüngenden Endes die Membran dichtend aufnimmt und zur dichtenden Anlage gegen eine den Ultraschallwandler aufnehmende Halterung vorgesehen ist.

Aus der EP 1 260 965 A2 ist ein Ultraschallsensor bekannt, der ein Gehäuse und eine Membran aufweist. Zwischen dem Gehäuse und der Membran ist ein Entkopplungsmedium angeordnet. Dabei kann es vorgesehen sein, dass das Entkopplungsmedium zwischen die Membran und das Gehäuse gegossen wird. Dies kann insbesondere mittels eine Spritzgussverfahrens erfolgen.

Die WO2014/016081 A1 beschreibt eine Ultraschallsensorvorrichtung mit einem Ultraschallsensor, der mittels eines Klebemittels an einem metallischen Teil angeordnet ist. Auf der Oberfläche des metallischen Teils um den Ultraschallsensor und das im Wesentlichen ringförmige Dämpfungsteil kann ein schallabsorbierendes und/oder schalldämpfendes Material aufgebracht sein, welches zum Unterdrücken der induzierten Störsignale dient. Vorzugsweise ist das schallabsorbierende und/oder schalldämpfende Material eine klebbare ein- oder mehrlagige Bitumenschicht. Nach einer weiteren Ausführung kann das schallabsorbierende und/oder schalldämpfende Material auch ein einspritzbares Material, beispielsweise ein Acrylat, ein Kautschuk oder ein Polyepoxid sein.

Es ist Aufgabe der vorliegenden Erfindung, eine Lösung aufzuzeigen, wie Schwingungen einem Gehäuse eines Ultraschallsensors für ein Kraftfahrzeug zuverlässig gedämpft werden können.

Die Aufgabe wird erfindungsgemäß durch einen Ultraschallsensor, durch eine Anordnung, durch ein Kraftfahrzeug sowie durch ein Verfahren mit den Merkmalen gemäß den jeweiligen unabhängigen Patentansprüchen gelöst. Vorteilhafte Weiterbildungen der vorliegenden Erfindung sind Gegenstand der abhängigen Patentansprüche, der Beschreibung und der Figuren.

Ein erfindungsgemäßer Ultraschallsensor für ein Kraftfahrzeug umfasst eine Membran, welche zum Aussenden eines Ultraschallsignals mittels eines Aktors anregbar ist. Zudem umfasst der Ultraschallsensor ein Gehäuse, in welchem die Membran zumindest bereichsweise angeordnet ist. Des Weiteren umfasst der Ultraschallsensor ein Dämpfungselement, welches in dem Gehäuse zum Dämpfen der Schwingung der Membran angeordnet ist. Das Dämpfungselement besteht zumindest teilweise aus einem Butylkautschuk und/oder aus Bitumen.

Der Ultraschallsensor ist insbesondere für den unverdeckten Einbau in einem Verkleidungsteil eines Kraftfahrzeugs ausgebildet. Der Ultraschallsensor kann in einer entsprechenden Aussparung oder Durchgangsöffnung des Verkleidungsteils angeordnet werden. Der Ultraschallsensor ist also in bei bestimmungsgemäßem Einbau am Kraftfahrzeug sichtbar. Der Ultraschallsensor umfasst eine Membran, welche beispielsweise topfförmig ausgebildet sein kann und aus Aluminium gefertigt sein kann. An der Membran beziehungsweise an dem Boden der Membran ist ein entsprechender Aktor, beispielsweise ein piezoelektrisches Element, angeordnet. Mittels des Aktors kann die Membran zu mechanischen Schwingungen angeregt werden. Auf diese Weise kann mit der Membran ein Ultraschallsignal ausgesendet werden. Das piezoelektrische Element dient insbesondere auch dazu, eine mechanische Schwingung der Membran zu erfassen. Somit kann das von einem Objekt reflektierte Ultraschallsignal wieder mit dem Ultraschallsensor empfangen werden. Die Membran ist zumindest bereichsweise in einem Gehäuse des Ultraschallsensors angeordnet. In dem Gehäuse kann zudem eine Elektronik zum Ansteuern des piezoelektrischen Elements beziehungsweise zum Auslesen der von dem piezoelektrischen Element bereitgestellten Spannungssignale angeordnet sein. In dem Gehäuse ist zudem ein Dämpfungselement angeordnet. Das Dämpfungselement dient dazu, die Schwingungen der Membran zu dämpfen. Das Dämpfungselement kann an der Membran angeordnet sein. Somit kann eine mechanische Schwingung der Membran gedämpft werden.

Vorliegend ist das Dämpfungselement zumindest teilweise aus einem Butylkautschuk und/oder aus Bitumen gefertigt. Das Dämpfungselement kann vollständig aus Butylkautschuk gefertigt sein. Alternativ dazu kann das Dämpfungselement vollständig aus Bitumen gefertigt sein. Es kann auch vorgesehen sein, dass das Dämpfungselement teilweise aus Butylkautschuk und teilweise aus Bitumen gefertigt ist. Dieser Butylkautschuk kann ein Copolymerisat von 95 bis 99 Mol-% Isobuten und 1 bis 5 Mol-% Isopropen sein. Somit wird erfindungsgemäß anstelle einer möglichst weichen und entkoppelten Aufhängung eine stark dämpfende Anbindung gewählt, die dadurch realisiert wird, dass das Dämpfungselement aus Butylkautschuk und/oder Bitumen gebildet ist. Ziel ist es hier, die von der Membran erzeugte Schwingung möglichst gut zu entkoppeln, das heißt die Schwingung nicht an das Gehäuse oder andere Bauteile des Ultraschallsensors zu übertragen, sondern die Schwingung gar nicht erst entstehen zu lassen. Dies kann durch das stark dämpfende Material des Dämpfungselements erreicht werden.

Bevorzugt ist das Dämpfungselement zumindest bereichsweise zwischen der Membran und dem Gehäuse angeordnet. Das Dämpfungselement kann zumindest einen Bereich aufweisen, der über der Membran angeordnet ist. Das Dämpfungselement kann auch dazu dienen, die Membran in dem Gehäuse zu halten. Somit können die mechanischen Schwingungen der Membran durch die hohe innere Dämpfung des Dämpfungselements in Wärme umgewandelt werden. Somit kann verhindert werden, dass die Schwingung an das Gehäuse oder andere umliegende Bauteile des Ultraschallsensors übertragen wird. Das Dämpfungselement kann auch dazu dienen, den Schall, der durch die Schwingung der Membran erzeugt wird, zu dämpfen. Somit kann beispielsweise ein Rückschall, der im Wesentlichen entgegengesetzt zu der Senderichtung des Ultraschallsensor gerichtet ist, gedämpft werden. Auf diese Weise kann ein zuverlässiger Betrieb des Ultraschallsensors ermöglicht werden.

In einer Ausführungsform ist die Membran im Wesentlichen topfförmig ausgebildet und weist einen Membranboden und eine Mantelfläche auf, wobei das Dämpfungselement die Mantelfläche zumindest bereichsweise umgibt. Dabei kann es auch vorgesehen sein, dass das Dämpfungselement die Mantelfläche vollständig umgibt. Das Dämpfungselement kann einen Bereich der Mantelfläche der Membran umfangsseitig umgeben. Das Dämpfungselement kann beispielsweise im Wesentlichen ringförmig ausgebildet sein. Somit können die Schwingungen der Membran und insbesondere der Mantelfläche der Membran zuverlässig gedämpft werden.

Weiterhin ist es vorteilhaft, wenn der Ultraschallsensor ein Deckelelement zum Halten der Membran in dem Gehäuse aufweist und das Dämpfungselement zumindest bereichsweise zwischen der Membran und dem Deckelelement angeordnet ist. Somit kann beispielsweise verhindert werden, dass mechanische Schwingungen der Membran an das Deckelelement und somit an das Gehäuse übertragen werden. Auf diese Weise kann zudem verhindert werden, dass mit dem Ultraschallsensor Scheinechos erfasst werden. Dies ermöglicht einen zuverlässigen Betrieb des Ultraschallsensors.

Für eine Ausgestaltung weist der Ultraschallsensor ein Dichtungselement zum Abdichten des Zwischenraums zwischen dem Deckelelement und der Membran auf. In dieser Ausführungsform kann ein separates Dichtungselement vorgesehen sein, das verhindert, dass Schmutz oder Feuchtigkeit in das Innere des Ultraschallsensors bzw. des Gehäuses eindringen kann. Auf diese Weise kann ein zuverlässiger Betrieb des Ultraschallsensors im Kraftfahrzeug garantiert werden.

In einer alternativen Ausführungsform ist das Dämpfungselement dazu ausgelegt, einen Zwischenraum zwischen dem Deckelelement und der Membran abzudichten. Mit anderen Worten kann in diesem Fall ein Teil des Dämpfungselements als Dichtungselement dienen. Somit dient das Dämpfungselement einerseits zum Dämpfen der mechanischen Schwingung der Membran und andererseits zum Abdichten des Ultraschallsensors.

In einer bevorzugten Ausführungsform ist das Dämpfungselement zumindest bereichsweise adhäsiv ausgebildet. Mit anderen Worten ist das Dämpfungselement selbstklebend ausgebildet. Da das Dämpfungselement aus Butylkautschuk und/oder Bitumen gefertigt ist, ergibt sich der Vorteil, dass dieses Material bzw. diese Materialien eine hohe Klebrigkeit aufweist. Zudem weist es eine gute Haftung auf verschiedenen Materialien auf. Somit kann der Ultraschallsensor einfach hergestellt werden.

Eine erfindungsgemäße Anordnung für ein Kraftfahrzeug umfasst zumindest einen erfindungsgemäßen Ultraschallsensor und ein Verkleidungsteil für das Kraftfahrzeug, wobei der zumindest eine Ultraschallsensor zumindest bereichsweise in einer Durchgangsöffnung des Verkleidungsteils angeordnet ist. Das Verkleidungsteil kann beispielsweise ein Stoßfänger oder ein anderes Karosseriebauteil des Kraftfahrzeugs sein. In dem Verkleidungsteil können beispielsweise mehrere Bohrungen vorgesehen sein, in welche die Ultraschallsensoren angebracht werden können. In der bestimmungsgemäßen Einbaulage der Ultraschallsensoren in dem Kraftfahrzeug sind die Ultraschallsensoren also von außen sichtbar. Zwischen den Ultraschallsensoren und dem Verkleidungsteil kann jeweils ein Entkopplungselement angeordnet sein, welches verhindert, dass Schwingungen von dem Ultraschallsensor auf das Verkleidungsteil übertragen werden. Der zumindest eine Ultraschallsensor kann nach dem Einbau in das Verkleidungsteil entsprechend lackiert werden. Hier ergibt sich durch die Verwendung des Dämpfungselements, das aus einem Butylkautschuk und/oder aus Bitumen gebildet ist, zudem der Vorteil, dass kein Silikonöl vorhanden ist, welches die Lackierung eventuell negativ beeinflusse kann.

Ein erfindungsgemäßes Kraftfahrzeug umfasst eine erfindungsgemäße Anordnung. Das Kraftfahrzeug ist insbesondere als Personenkraftwagen ausgebildet. Der zumindest eine Ultraschallsensor kann dabei Teil eines Fahrerassistenzsystems, beispielsweise eines Einparkassistenten, des Kraftfahrzeugs sein.

Ein erfindungsgemäßes Verfahren dient zum Herstellen eines Ultraschallsensors für ein Kraftfahrzeug. Dabei werden eine Membran, welche zum Aussenden eines Ultraschallsignals mittels eines Aktors anregbar ist und ein Gehäuse bereitgestellt. Zudem wird die Membran zumindest bereichsweise in dem Gehäuse angeordnet. Ferner wird ein Dämpfungselement zum Dämpfen der Schwingung der Membran in dem Gehäuse angeordnet. Das Dämpfungselement, welches in dem Gehäuse angeordnet wird, besteht zumindest teilweise aus einem Butylkautschuk und/oder aus einem Bitumen.

Bevorzugt wird das Dämpfungselement an das Gehäuse und/oder die Membran geklebt. Das Dämpfungselement kann mit einem entsprechenden Klebstoff an dem Gehäuse und/oder der Membran befestigt werden. Dabei kann es auch vorgesehen sein, dass das Dämpfungselement selbstklebend ausgebildet ist und entsprechend an dem Gehäuse und/oder der Membran angeordnet wird. Somit kann der Ultraschallsensor einfach und kostengünstig hergestellt werden.

In einer weiteren Ausführungsform ist es vorgesehen, dass das Dämpfungselement mittels eines Gießverfahrens und/oder eines Spritzgussverfahrens hergestellt wird. Das Dämpfungselement kann beispielsweise vollständig aus Butylkautschuk gebildet sein. Alternativ dazu kann das Dämpfungselement vollständig aus Bitumen gefertigt sein. Das Dämpfungselement kann auch teilweise aus Butylkautschuk und teilweise aus Bitumen gebildet sein. Es kann beispielsweise ein entsprechendes 2-Komponenten-Spritzgussverfahren verwendet werden. Somit kann das Dämpfungselement einfach und kostengünstig hergestellt werden.

Die mit Bezug auf den erfindungsgemäßen Ultraschallsensor vorgestellten bevorzugten Ausführungsformen und deren Vorteile gelten entsprechend für die erfindungsgemäße Anordnung, das erfindungsgemäße Kraftfahrzeug sowie für das erfindungsgemäße Verfahren.

Weitere Merkmale der Erfindung ergeben sich aus den Ansprüchen, den Figuren und der

Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1: in einer geschnittenen Seitenansicht einen Ultraschallsensor für ein Kraftfahrzeug gemäß einer ersten Ausführungsform der Erfindung; und
- Fig. 2: einen Ultraschallsensor in einer weiteren Ausführungsform.

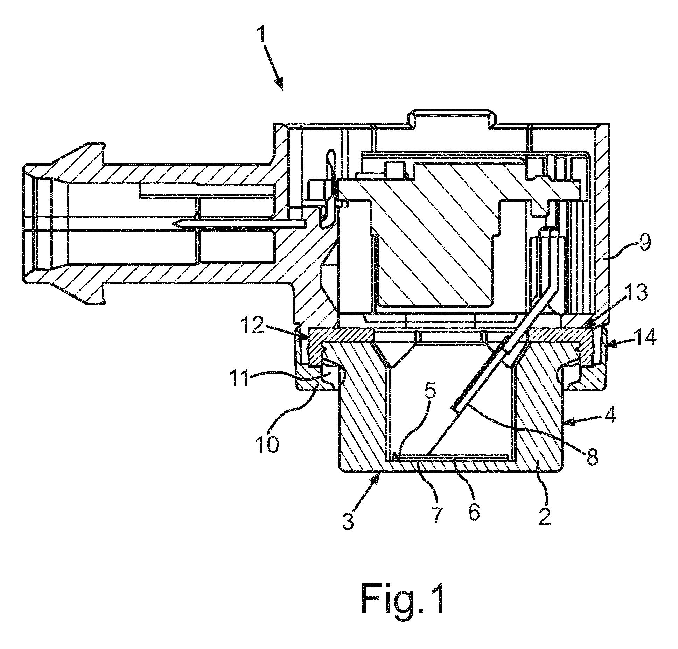

Fig. 1 zeigt einen Ultraschallsensor 1 für ein Kraftfahrzeug in einer geschnittenen Seitenansicht. Ein solcher Ultraschallsensor 1 kann beispielsweise Teil eines Fahrerassistenzsystems des Kraftfahrzeugs sein. Beispielsweise kann ein derartiger Ultraschallsensor 1 Teil eines Parkassistenzsystems sein. Der Ultraschallsensor 1 ist dazu ausgelegt, in einer entsprechenden Durchgangsöffnung eines Verkleidungsteils des Kraftfahrzeugs angeordnet zu werden. Der Ultraschallsensor 1 ist also in der bestimmungsgemäßen Einbaulage von außen sichtbar.

Der Ultraschallsensor 1 umfasst eine Membran 2. Die Membran 2 ist im Wesentlichen topfförmig ausgebildet und kann beispielsweise aus Aluminium gefertigt sein. Die Membran 2 weist einen Membranboden 3 und eine Mantelfläche 4 auf. An der Rückseite 5 des Mantelbodens 3 ist ein Aktor 6, der beispielsweise ein piezoelektrisches Element umfasst, mit einem entsprechenden Klebstoff 7 befestigt. Innerhalb der Membran 2 kann ein entsprechender Schaum angeordnet sein. Der Aktor 6 ist mit einem elektrischen Kontaktelement 8 mit einer hier nicht näher beschriebenen Sensorelektronik verbunden.

In einem Sendebetrieb des Ultraschallsensors 1 wird der Aktor 6 mit einer elektrischen Spannung versorgt. Auf diese Weise kann die Membran 2 und insbesondere der Membranboden 3 mittels des Aktors 6 zu mechanischen Schwingungen angeregt werden. Die Schwingung führt dazu, dass die Membran 2 ein Ultraschallsignal aussendet. In einem anschließenden Empfangsbetrieb des Ultraschallsensors 1 ist der Aktor 6 nicht mehr mit elektrischer Energie versorgt. In diesem Empfangsbetrieb kann das von einem Objekt reflektierte Ultraschallsignal, das auf die Membran 2 trifft, empfangen werden. Das reflektierte Ultraschallsignal bewirkt eine mechanische Schwingung der Membran 2. Diese kann mit dem Aktor 6 beziehungsweise dem piezoelektrischen Element 6 erfasst werden.

Der Ultraschallsensor 1 umfasst zudem ein Gehäuse 9, in welchem die Membran 2 zumindest bereichsweise angeordnet ist. In dem vorliegenden Ausführungsbeispiel umfasst der Ultraschallsensor 1 bzw. das Gehäuse 9 zudem ein Deckelelement 10, welches zum Halten der Membran 2 in dem Gehäuse 9 dient. Ferner ist in dem vorliegenden Beispiel ein Dichtungselement 11 vorgesehen, welches zwischen der Membran 2 und dem Deckelelement 10 angeordnet ist. Das Dichtungselement 11 dient zum Abdichten des Zwischenraums zwischen dem Deckelelement und der Membran 2.

Der Ultraschallsensor 1 umfasst zudem ein Dämpfungselement 12. Das Dämpfungselement 12 ist in dem Gehäuse 9 des Ultraschallsensors 1 angeordnet. In dem vorliegenden Ausführungsbeispiel weist das Dämpfungselement 12 einen ersten Bereich 13 auf, der zwischen der Membran 2 und dem Gehäuse 9 angeordnet ist. Zudem weist das Dämpfungselement 12 einen zweiten Bereich 14 auf, der die Mantelfläche 4 der Membran 2 zumindest bereichsweise umfangsseitig umgibt. Das Dämpfungselement 12 kann aus einem Butylkautschuk gefertigt sein. Alternativ dazu kann das Dämpfungselement 12 aus Bitumen gefertigt sein. Es kann auch vorgesehen sein, dass das Dämpfungselement teilweise aus einem Butylkautschuk und teilweise aus Bitumen gefertigt ist. Das Dämpfungselement 12 dient dazu, die Schwingungen der Membran 2 zu dämpfen. Insbesondere dient es dazu, die Schwingung der Membran 2 nach der Sendephase, also beim Ausschwingen der Membran 2, zu dämpfen. Somit kann verhindert werden, dass die Schwingungen an das Gehäuse 9 oder andere Bauteile des Ultraschallsensors 1 übertragen wird und somit Messfehler auftreten.

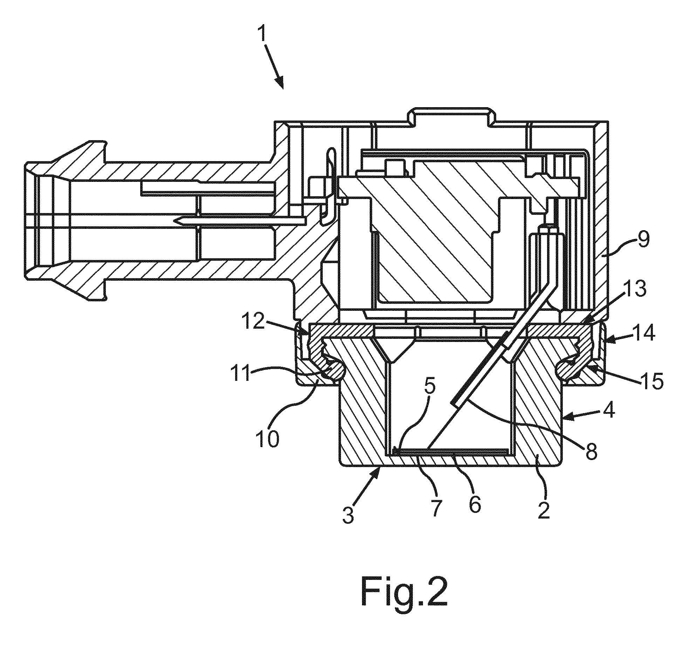

Fig. 2 zeigt einen Ultraschallsensor 2 in einer weiteren Ausführungsform. In diesem Fall weist das Dämpfungselement 12 zudem einen dritten Bereich 15 auf, der sich an den zweiten Bereich 14 anschließt und der den oberen Bereich der Mantelfläche 4 weiter umgibt. Vorliegend ist der dritte Bereich 15 des Dämpfungselements 12 in dem Zwischenraum zwischen dem Deckelelement 10 und der Membran 2 angeordnet ist. In diesem Fall kann es vorgesehen sein, dass der Ultraschallsensor 1 kein Dichtungselement 11 auf. In diesem Fall könnte das Dämpfungselement 12 zugleich als Dichtungselement dienen. Es kann aber auch vorgesehen sein, dass zusätzlich zudem Dämpfungselement 12 in Dichtungselement 11 vorgesehen ist.

## Patentansprüche

1. Ultraschallsensor (1) für ein Kraftfahrzeug, mit einer Membran (2), welche zum Aussenden eines Ultraschallsignals mittels eines Aktors (6) anregbar ist, mit einem Gehäuse (9), in welchem die Membran (2) zumindest bereichsweise angeordnet ist, und mit einem Dämpfungselement (12), welches in dem Gehäuse (9) zum Dämpfen der Schwingung der Membran (2) angeordnet ist,
**dadurch gekennzeichnet, dass**
das Dämpfungselement (12) zumindest teilweise aus einem Butylkautschuk und/oder aus Bitumen besteht.

2. Ultraschallsensor (1) nach Anspruch 1,
**dadurch gekennzeichnet, dass**
das Dämpfungselement (12) zumindest bereichsweise zwischen der Membran (2) und dem Gehäuse (9) angeordnet ist.

3. Ultraschallsensor (1) nach Anspruch 1 oder 2,
**dadurch gekennzeichnet, dass**
die Membran (2) in Wesentlichen topfförmig ausgebildet ist und einen Membranboden (3) und eine Mantelfläche (4) aufweist, wobei das Dämpfungselement (12) die Mantelfläche (4) zumindest bereichsweise umgibt.

4. Ultraschallsensor (1) nach einem der vorhergehenden Ansprüche,
**dadurch gekennzeichnet, dass**
der Ultraschallsensor (1) ein Deckelelement (10) zum Halten der Membran (2) in dem Gehäuse (9) aufweist und das Dämpfungselement (12) zumindest bereichsweise zwischen der Membran (2) und dem Deckelement (10) angeordnet ist.

5. Ultraschallsensor (1) nach Anspruch 4,
**dadurch gekennzeichnet, dass**
der Ultraschallsensor (1) ein Dichtungselement (11) zum Abdichten eines Zwischenraums zwischen dem Deckelelement (10) und der Membran (2) aufweist.

6. Ultraschallsensor (1) nach Anspruch 4,
**dadurch gekennzeichnet, dass**
das Dämpfungselement (12) dazu ausgelegt ist, einen Zwischenraums zwischen dem Deckelelement (10) und der Membran (2) abzudichten.

7. Ultraschallsensor (1) nach einem der vorhergehenden Ansprüche,
**dadurch gekennzeichnet, dass**
das Dämpfungselement (12) zumindest bereichsweise adhäsiv ausgebildet ist.

8. Anordnung für ein Kraftfahrzeug mit zumindest einem Ultraschallsensor (1) nach einem der Ansprüche 1 bis 7 und einem Verkleidungsteil für das Kraftfahrzeug, wobei der zumindest eine Ultraschallsensor (1) zumindest bereichsweise in einer Durchgangsöffnung des Verkleidungsteils angeordnet ist.

9. Kraftfahrzeug mit einer Anordnung nach Anspruch 8.

10. Verfahren zum Herstellen eines Ultraschallsensors (1) für ein Kraftfahrzeug, bei welchem eine Membran (2), welche zum Aussenden eines Ultraschallsignals mittels eines Aktors anregbar ist und ein Gehäuse (9) bereitgestellt werden, die Membran (2) zumindest bereichsweise in dem Gehäuse (9) angeordnet wird und ein Dämpfungselement (12) zum Dämpfen der Schwingung der Membran (2) in dem Gehäuse (9) angeordnet wird,
**dadurch gekennzeichnet, dass**
das Dämpfungselement (12), welches in dem Gehäuse (9) angeordnet wird, zumindest teilweise aus einem Butylkautschuk und/oder aus Bitumen besteht.

11. Verfahren nach Anspruch 10,
**dadurch gekennzeichnet, dass**
das Dämpfungselement (12) an das Gehäuse (9) und/oder an die Membran (2) geklebt wird.

12. Verfahren nach Anspruch 10 oder 11,
**dadurch gekennzeichnet, dass**
das Dämpfungselement (12) mittels eines Gießverfahrens und/oder eines Spritzgussverfahrens hergestellt wird.
